Europäisches Patentamt

European Patent Office

Office européen des brevets

(19)

(11) Publication number: **0 057 638**
**B1**

(12) **EUROPEAN PATENT SPECIFICATION**

(45) Date of publication of patent specification: **27.03.85**

(51) Int. Cl.⁴: **B 60 T 11/20**

(21) Application number: **82400145.7**

(22) Date of filing: **27.01.82**

(54) **Master cylinder.**

(30) Priority: **30.01.81 US 229691**

(43) Date of publication of application:
**11.08.82 Bulletin 82/32**

(45) Publication of the grant of the patent:
**27.03.85 Bulletin 85/13**

(84) Designated Contracting States:
**DE FR GB IT**

(56) References cited:
**GB-A-1 539 879**
**US-A-3 357 183**
**US-A-4 249 381**

(73) Proprietor: **THE BENDIX CORPORATION**
**Executive Offices Bendix Center**
**Southfield Michigan 48037 (US)**

(72) Inventor: **Gaiser, Robert Frank**
**5843 Ponderosa Drive**
**Stevensville Michigan 49127 (US)**

(74) Representative: **Huchet, André et al**
**Service Brevets Bendix 44, rue François 1er**
**F-75008 Paris (FR)**

Courier Press, Leamington Spa, England.

## Description

The present invention relates to master cylinders, particularly for use in automotive braking systems, and it has for its main object an improvement to these master cylinders which are provided with a cartridge-type piston assembly.

Such a master cylinder is illustrated, for instance, in GB—A—2017240 assigned to same Applicant as the present application, and wherein a die-cast housing defines a bore having an open end receiving a piston assembly. The piston assembly, which cooperates with the housing to trap and pressurize liquid in a pair of variable-volume pressure chambers, includes a pair of piston members which are slidably and sealingly received in respective bores formed in a sleeve member and in a bearing member, which latter is retained at the open end of the bore by a pin engaging the housing. The bearing member retains the remaining component parts of the piston assembly within the housing and resists the resilient bias provided by a return spring of the piston assembly.

With a master cylinder of the type illustrated in the above Patent, virtually all of the component parts of the piston assembly must be individually inserted into the housing bore during manufacture of the master cylinder. Similarly, when the master cylinder requires maintenance to replace a seal or some other part of the piston assembly, virtually all of the component parts of the piston assembly must be removed individually from the bore of the housing. When the part to be replaced is identified and the new part substituted, the component parts of the piston assembly must once again be individually inserted into the housing bore. As a result, both manufacturing and maintenance of such a master cylinder are complex, time consuming and expensive.

It is, therefore, an essential object of the present invention to improve the constructive design of such a master cylinder so as to avoid the above defined drawbacks, and to simplify its manufacturing and maintenance in comparison to prior master cylinders.

This object is achieved, in accordance with the teaching of this invention, and in a master cylinder of the kind comprising a housing defining a bore therein and a reservoir for holding a liquid, said housing having a pair of inlets communicating liquid from said reservoir into said housing bore and a pair of outlets communicable with a pair of fluid pressure responsive devices, and a piston assembly sealingly received in said housing bore and cooperating with said housing to define a pair of variable-volume pressure chambers each of which communicates with one of said inlets and with one of said outlets, said piston assembly including a sleeve member and a bearing member defining a pair of bores in which are slidably and sealingly received a pair of piston members, said pair of piston members cooperating with said sleeve member and with said bearing member to define a variable-volume cavity within said piston assembly, said piston assembly further including passage means for communicating said variable-volume cavity with one of said inlets and with one of said outlets, and said variable-volume cavity thus defining a portion of one of said variable-volume pressure chambers, thanks to the fact that said sleeve member and said bearing member are provided with cooperating means which secure them to one another permanently, thus permitting the insertion or removal of said piston assembly into or from the housing bore as a unit.

In a preferred embodiment of the invention, wherein the bearing member comprises an axially-extending portion which projects into an open end of the sleeve member bore, the above-mentioned cooperating means include a plurality of circumferentially-spaced, radially-extending projections formed on said axially-extending bearing member portion which engage said sleeve member so as to create therewith an interference fit securing said sleeve member and said bearing member to one another. Furthermore, one of the piston members which is received in the sleeve member is cup-shaped and comprises a closed end, a circumferentially-extending side wall and a radially-extending flange formed at the open end of said side wall which faces the bearing member, a resilient member extends between said sleeve member and said radially-extending flange for yieldably biasing said cup-shaped piston toward said bearing member, and the sleeve member is then provided with stop means for abuttingly engaging said radially-extending flange and opposing said yieldable bias. Advantageously, said stop means will consist of a plurality of circumferentially-spaced, radially-extending projections which are formed on the sleeve member so as to protrude inwardly thereof.

The advantages of a master cylinder according to the invention are mainly that the piston assembly is a unitary component or cartridge because the sleeve member is secured to the bearing member. As a result, the cartridge piston assembly may be inserted into and removed from the housing bore as a unit to facilitate manufacture and maintenance of the master cylinder. Manufacturing of the master cylinder is simplified because virtually all of the component parts of the piston assembly are carried within the cartridge piston assembly. The cartridge piston assembly may be manufactured as a subassembly of the master cylinder and be loaded into the housing bore as one of the final manufacturing operations. The cartridge piston assembly may be employed in a variety of different housings to produce master cylinders uniquely adapted to their particular destinies. A pin like that which holds the bearing member in the above cited Patent within the housing bore is not needed in a master cylinder according to the invention because all return spring biases are absorbed within the cartridge piston assembly. Maintenance of a master cylinder according to the invention is simplified because when maintenance is needed the old cartridge piston assembly is removed from the housing bore and replaced entirely with a new cartridge piston assembly. Consequently, maintenance operations can be completed quickly by relatively unskilled service personnel and with little chance of incorrect reassembly of the master cylinder.

These and other advantageous features of the invention will become readily apparent from reading the following description of a preferred embodiment, given by way of example only, and with reference to the accompanying drawings, in which:

Figure 1 is a cross-sectional view of a master cylinder according to the invention;

Figure 2 is an enlarged view of an encircled portion of Figure 1;

Figure 3 is a fragmentary perspective view of a cartridge piston assembly illustrating its insertion into a housing bore; and

Figure 4 is a fragmentary cross-sectional view illustrating a manufacturing step wherein a cup-shaped piston member is trapped within a sleeve member by protrusions formed on the sleeve member by a tool.

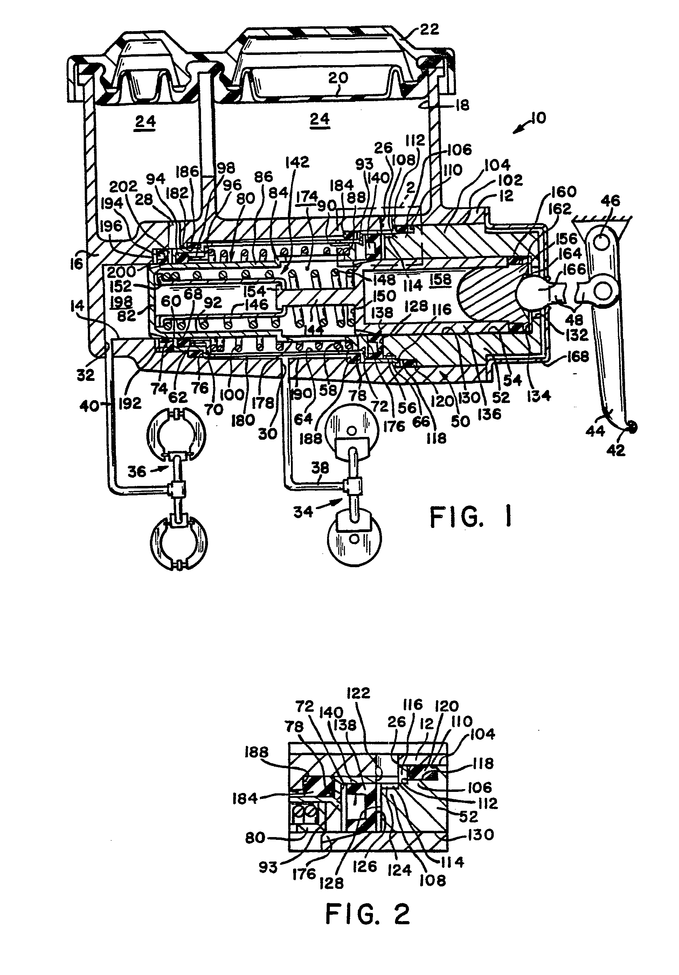

Figure 1 illustrates a master cylinder 10 having a housing 12. The housing 12 defines a blind bore 14 having an end wall 16. The housing 12 also defines a recess 18 which is closed by a flexible diaphragm 20 and by a cap 22 to define a liquid reservoir 24 for the master cylinder. The cap 22 comprises vent holes (not shown) so that the upper surface of diaphragm 20 is exposed to ambient atmospheric pressure and liquid held in the reservoir 24 is maintained at substantially atmospheric pressure. The housing 12 has a pair of inlets 26 and 28 communicating liquid from the reservoir 24 into the bore 14. Similarly, the housing 12 has a pair of outlets 30 and 32 communicating liquid from the bore 14 to a pair of fluid pressure responsive brake systems 34 and 36 via conduits 38 and 40, respectively.

A brake pedal 42 having a lever 44 is pivoted at 46. The brake pedal 42 is connected via a push rod 48 to a cartridge piston assembly 50 which is received in the bore 14 of housing 12. In response to an operational input from the brake pedal 42 through push rod 48, the cartridge piston assembly 50 cooperates with the housing 12 to trap and pressurize liquid in the bore 14. Pressurized liquid is supplied from the bore 14 to the brake systems 34 and 36 via conduits 38 and 40 to effect a brake application.

The cartridge piston assembly 50 includes a bearing member 52 provided with a bore 54 therethrough. A sleeve member 56 having a bore 58 therethrough is secured to the bearing member 52. The sleeve member 56 and bearing member 52 cooperate to define a tubular housing of the cartridge piston assembly 50.

The bore 58 of sleeve member 56 is stepped to provide a small diameter bore portion 60, a first intermediate diameter bore portion 62, a second intermediate diameter bore portion 64, and a large diameter bore portion 66. The portions of bore 58 cooperate with one another to define a series of steps 68, 70 and 72. Because the side wall of the sleeve member 56 is relatively thin, each of the steps 68, 70 and 72 on the bore 58 defines a corresponding shoulder 74, 76 and 78 on the outside of the sleeve member.

A cup-shaped piston member 80 is reciprocably received within the sleeve member 56. The cup-shaped piston member 80 includes an end wall 82 and a circumferentially-extending side wall 84. The side wall 84 comprises a small diameter piston portion 86 and a large diameter piston portion 88. The piston portions 86 and 88 cooperate to define a shoulder 90 on the cup-shaped piston member 80. A bore 92 is defined in the cup-shaped piston member 80 opening at the end thereof defining the large diameter piston portion 88.

The small diameter portion 86 of cup-shaped piston 80 extends through the small diameter bore portion 60 of sleeve member 56. The large diameter piston portion 88 is received in the second intermediate diameter bore portion 64 of sleeve member 56. A multitude of radially inwardly extending projections 93, viewing Figure 2, are formed on the sleeve member 56 adjacent the step 72 thereof. The projections 93 are engageable with the large diameter piston portion 88 to trap the cup-shaped piston within the sleeve member 56. An annular O-ring sealing member 94 circumscribes the small diameter portion 86 of the cup-shaped piston 80. The sealing member 94 sealingly cooperates with the sleeve member 56 at the step 68 thereof while the cup-shaped piston 80 movably and sealingly cooperates with the sealing member 94. An annular spring seat 96 circumscribes the small diameter portion 86 of the cup-shaped piston 80. The spring seat 96 engages the step 70 on the bore 58 and includes an axially-extending leg 98 engageable with the sealing member 94 to hold the sealing member 94 at the step 68. A first coil compression spring 100 extends between the spring seat 96 and the shoulder 90 of the cup-shaped piston 80. The coil spring 100 yieldably biases the cup-shaped piston member 80 toward engagement with the projections 93 of sleeve member 56.

The bearing member 52 has a stepped cylindrical outer surface 102 thereon. The stepped cylindrical surface 102 provides a first large diameter portion 104 which is engageable with the housing 12, an intermediate diameter portion 106, and a small diameter portion 108. The cylindrical surface portions 104, 106 and 108 cooperate to define a pair of spaced-spart shoulders 110 and 112 on the bearing member 52. The small diameter portion 108 of the bearing member 52 is received within the large diameter bore portion 66 of the sleeve member 56. The small diameter bearing member portion 108 extends axially within the bore portion 66 and is provided with a multitude of circumferentially spaced, axially and radially extending projections 114. Projections 114 define an interference fit with the large diameter bore portion 66 of the sleeve member 56.

The interference fit defined between the sleeve member 56 and bearing member 52 secures these members together as a unitary assembly. The sleeve member 56 engages the shoulder 112 on the bearing member 52. A radially outwardly extending flange 116 formed on the sleeve member 56 circumscribes the small diameter portion 108 of the bearing member 52 adjacent the shoulder 112. The flange 116 cooperates with the intermediate diameter portion 106 and shoulder 110 of bearing member 52 to define an annular groove 118. An annular O-ring sealing member 120 is received in the groove 118 and sealingly cooperates with the housing 12.

An aperture 122 formed on the sleeve member 56 communicates with inlet 26 and with chambers 124 formed between the projections 114. The bearing member 52 is provided with a multitude of radially-extending grooves 126 communicating across the end surface 128 of the bearing member 52 between the chambers 124 and the bore 54.

The bore 54 of the bearing member 52 is stepped to provide a large diameter portion 130 opening at one end of the bearing member and a small diameter bore portion 132 opening at the other end of the bearing member. The bore portions 130 and 132 cooperate to define a graduation 134 on the bore 54. A piston member 136 is reciprocably received in the large diameter bore portion 130. The piston member 136 protrudes from the bore 54 adjacent the end surface 128 of the bearing member 52. An annular lip seal 138 circumscribes the piston member 136. The lip seal 138 is received in an annular recess 140 defined between the step 72 of sleeve member 56 and the end surface 128 of bearing member 52.

A collapsible spring cage 142 is carried by the piston member 136. The spring cage 142 includes an elongate stem 144 extending from the piston member 136 and a cup-shaped spring seat 146 which is movably carried on the stem 144. A second coil compression spring 148 extends between a shoulder 150 on the piston member 136 and a flange 152 on the spring seat 146. The spring 148 yieldably biases the spring seat into engagement with a head 154 of the stem 144. The spring seat 146 engages the end wall 82 of the cup-shaped piston member 80.

The piston member 136 carries a socket member 156 which is press-fitted into a cavity 158 defined in the piston member. The socket member 156 cooperates with the piston member to define an annular groove 160. An O-ring sealing member 162 is received in the groove 160 and sealingly cooperates with the bearing member 52. A recess 164 formed on the socket member 156 pivotally receives a ball-end portion 166 of the push-rod 48. The socket member 156 is engageable with the graduation 134 defined on the bore 54.

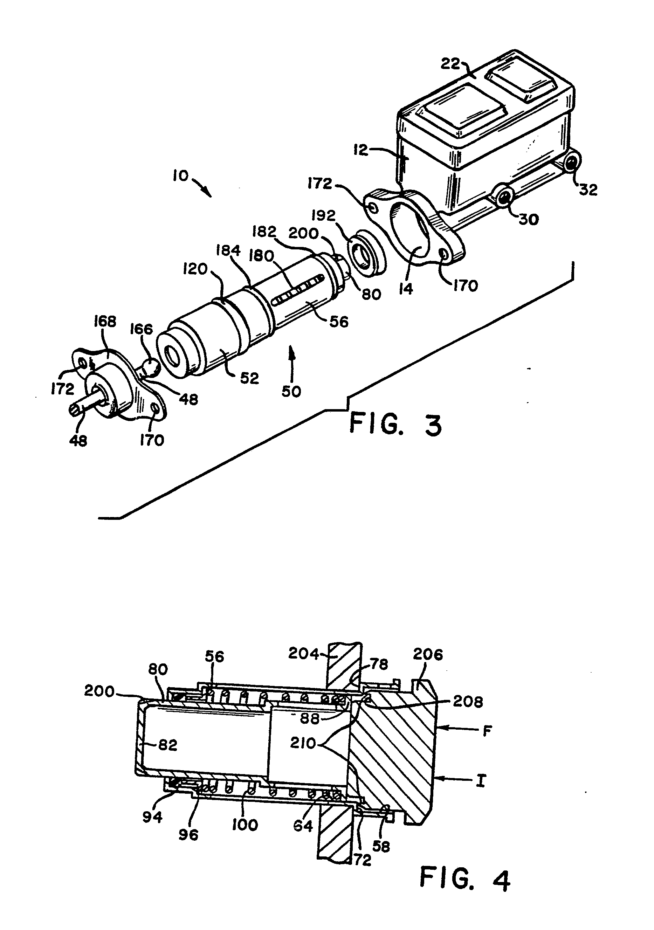

A retainer 168 is secured to the housing 12 by bolts (not shown) which pass through apertures 170 and 172 formed on the housing 12 and the retainer 168, respectively, viewing Figure 3. The retainer 168 engages the bearing member 52 to trap the cartridge piston assembly 50 within the bore 14 of the housing 12. The retainer 168 also engages the ball-end portion 166 of the push rod 48 to space the socket member 156 from graduation 134 to define a non-braking position for the piston member, as is illustrated in Figure 1. Because the spring rate and/or preload of the second coil spring 148 is greater than that of the first coil spring 100, the spring 100 is contracted by the spring 148 to define a nonbraking position for the cup-shaped piston member 80. In the nonbraking position of the cup-shaped piston 80, the large diameter portion 88 of the cup-shaped piston is spaced from the projections 93 of the sleeve member 56, as illustrated by Figure 1.

The cup-shaped piston 80, piston member 136, sleeve member 56, and bearing member 52 cooperate to define a variable-volume cavity 174 within the cartridge piston assembly 50. In the non-braking position of the piston member 136, a notch 176 communicates liquid from the reservoir 24 into the cavity 174 via aperture 122, chambers 124, and grooves 126. Similarly, the cavity 174 is communicated with the outlet 30 via apertures 178 and 180 formed in the cup-shaped piston member 80 and the sleeve member 56, respectively.

The cartridge piston assembly 50 carries a pair of O-ring sealing members 182 and 184 adjacent the shoulders 76 and 78 of the sleeve member 56, respectively. The sealing members 182 and 184 cooperate with steps 186 and 188 on the bore 14 on housing 12 to bound an annular chamber 190 communicating with the outlet 30 and with the variable volume cavity 174. Similarly, an annular lip seal 192 is received in an annular recess 194 defined between a step 196 on the bore 14 and the shoulder 74 of the sleeve member 56. The cup-shaped piston member 80 protrudes from the cartridge piston assembly 50 and is movably and sealingly received within the lip seal 192. The housing 12, cup-shaped piston member 80 and lip seal 192 cooperate to bound a variable-volume chamber 198 communicating with the outlet 32. A notch 200 on the cup-shaped piston member 80, similar to the notch 176, communicates liquid from the reservoir 24 into the variable-volume chamber 198 via inlet 28 and a radial groove 202 defined in the back of the lip seal 192.

Figure 3 illustrates a cartridge piston assembly 50 and lip seal 192 preparatory to their insertion into the bore 14 of a member cylinder housing 12. It will be understood upon a study of Figure 1, that when the cartridge piston assembly 50 is isolated or separated from the housing 12 and retainer 168, as illustrated in Figure 3, the socket member 156 engages the graduation 134 on the bore 54 of bearing member 52. Similarly, the large diameter portion 88 of the cup-shaped piston member 80 engages the projections 93 on the sleeve member 56. The first coil spring 100 is opposed by the projections 93 on the sleeve member 56. The length of the spring cage 142 is such that little, if any, spring force from the second coil spring 148 is transferred from the socket member 156 to the bearing member 52. As a result, the interference fit defined between the sleeve member 56 and bearing member 52 is subjected to little, if any, spring forces tending to separate the sleeve member and bearing member.

The cartridge piston assembly 50 forms a unitary subassembly which may be assembled with a housing 12 during manufacture of the master cylinder. Similarly, a worn cartridge piston assembly may be removed as a unit from a master cylinder housing and a new cartridge piston assembly substituted in the housing in order to rebuild a master cylinder.

The operation of a master cylinder according to the invention is precisely the same as that described in GB—A—2017240 and will not, therefore, be further discussed here.

Figure 4 illustrates a step in the manufacture of a cartridge piston assembly according to the invention. A sleeve member 56 is supported at its shoulder 78 by an annular holder 204. An O-ring sealing member 94, spring seat 96, first coil compression spring 100, and cup-shaped piston member 80 are received within the bore 58 of the sleeve member. A tool 206 is engaged with the large diameter portion 88 of the cup-shaped piston member 80. A force F is applied to the tool 206 contracting the spring 100 and moving the large diameter portion 88 of piston member 80 into the second intermediate diameter bore portion 64 of the sleeve member 56, as is illustrated in Figure 4. The tool 206 includes a shoulder 208 which is engageable with the step 72 on the sleeve member 56. A multitude of circumferentially spaced, conical punch points 210 are formed on the shoulder 208 and engage the step 72 because of the force F. An additional impact force I is applied to the tool 206 driving the punch points 210 into the step 72 so that the shoulder 208 engages the step 72. Material of sleeve member 56 at the step 72 is displaced radially inwardly by the punch points 210 to form the radially inwardly extending projections 93, which are illustrated in Figure 2. The projections 93 trap the cup-shaped piston member 80 within the sleeve member 56 and oppose the spring 100 in the nonbraking position of the piston member 80.

**Claims**

1. A master cylinder (10) comprising a housing (12) defining a bore (14) therein and a reservoir (24) for holding a liquid, said housing having a pair of inlets (26, 28) communicating liquid from said reservoir into said housing bore and a pair of outlets (30, 32) communicable with a pair of fluid pressure responsive devices (34, 36), and a piston assembly (50) sealingly received in said housing bore and cooperating with said housing to define a pair of variable-volume pressure chambers (190, 198) each of which communicates with one of said inlets and with one of said outlets, said piston assembly including a sleeve member (56) and a bearing member (52) defining a pair of bores (58, 54) in which are slidably and sealingly received a pair of piston members (80, 136), said pair of piston members cooperating with said sleeve member and with said bearing member to define a variable-volume cavity (174) within said piston assembly, said piston assembly further including passage means (178, 180) for communicating said variable-volume cavity with one of said inlets and with one of said outlets and said variable-volume cavity thus defining a portion of one of said variable-volume pressure chambers, characterized in that said sleeve member (56) and said bearing member (52) are provided with cooperating means (108, 114, 66) which secure them to one another permanently, thus permitting the insertion or removal of said piston assembly (50) into or from the housing bore as a unit.

2. A master cylinder according to claim 1, wherein the bearing member (52) comprises an axially-extending portion (108) which projects into an open end of the sleeve member bore (58), characterized in that said cooperating means include a plurality of circumferentially-spaced, radially-extending projections (114) formed on said axially-extending bearing member portion (108) which engage said sleeve member (56) so as to create therewith an interference fit securing said sleeve member and said bearing member to one another.

3. A master cylinder according to claim 1 or 2, wherein one (80) of the piston members which is received in the sleeve member (56) is cup-shaped and comprises a closed end (82), a circumferentially-extending side wall (84) and a radially-extending flange (88) formed at the open end of said side wall which faces the bearing member (52), a resilient member (100) extending between said sleeve member and said radially-extending flange for yieldably biasing said cup-shaped piston toward said bearing member, characterized in that the sleeve member is provided with stop means (93) for abuttingly engaging said radially-extending flange and opposing said yieldable bias.

4. A master cylinder according to claim 3, characterized in that said stop means consist of a plurality of circumferentially-spaced, radially-extending projections (93) which are formed on the sleeve member so as to protrude inwardly thereof.

**Revendications**

1. Un maître-cylindre (10) du type comprenant un corps (12) dans lequel est formé un alésage (14) et un réservoir (24) pour contenir un liquide, ledit corps ayant deux orifices d'entrée (26, 28) pour transférer le liquide dudit réservoir audit alésage du corps et deux orifices de sortie (30, 32) qui peuvent être mis en communication avec deux dispositifs (34, 36) sensibles à une pression de fluide, et un ensemble (50) de pistons reçu de manière étanche dans ledit alésage du corps et coopérant avec ledit corps pour délimiter deux chambres de pression (190, 198) à volume variable dont chacune communique avec l'un desdits orifices d'entrée et avec l'un desdits orifices de sortie, ledit ensemble de pistons comprenant un organe (56) formant manchon et un organe porteur (52) qui délimitent deux alésages (58, 54) dans lesquels sont reçus à coulissement et de manière étanche une paire d'organes formant piston (80, 136) ladite paire d'organes formant piston coopérant avec ledit organe formant manchon et avec ledit organe porteur pour délimiter une cavité (174) à volume variable à l'intérieure dudit ensemble de pistons, ledit ensemble de piston comportant, en outre, des moyens de passage (178, 180) pour faire communiquer ladite cavité à volume variable avec l'un desdits orifices d'entrée et avec l'un desdits orifices de sortie et ladite cavité à volume variable formant ainsi une partie de l'une desdites chambres de pression à volume variable, caractérisé en ce que ledit organe (56) formant manchon et ledit organe porteur (52) sont munis de moyens coopérants (108, 114, 66) qui les solidarisent entre eux de manière permanente, permettant ainsi l'introduction et l'enlèvement en un seul bloc dudit ensemble (50) de pistons dans et hors de l'alésage du corps.

2. Un maître-cylindre selon la revendication 1, dans lequel l'organe porteur (52) comprend une partie (108) s'étendant axialement qui fait saillie dans une extrémité ouverte de l'alésage (58) de l'organe formant manchon, caractérisé en ce que lesdits moyens coopérants comprennent une série de saillies (114) s'étendant radialement circonférentiellement espacées formées sur ladite partie (108) s'étendant axialement de l'organe porteur qui sont en appui contre ledit organe (56) formant manchon de façon à créer avec lui un ajustage avec serrage qui rend l'organe formant manchon et l'organe formant porteur solidaires l'un de l'autre.

3. Un maître-cylindre selon la revendication 1 ou 2, dans lequel l'un (80) des organes formant piston qui est reçu dans l'organe (56) formant manchon est en forme de cuvette et comprend une extrémité fermée (82), une paroi latérale (84) s'étendant circonférentiellement et une collerette (88) s'étendant radialement formée à l'extrémité ouverte de ladite paroi latérale qui fait face à l'organe porteur (52), un organe élastique (100) étant monté entre ledit organe formant manchon et ladite collerette s'étendant radialement pour solliciter élastiquement ledit piston en forme de cuvette en direction dudit organe porteur, caractérisé en ce que l'organe formant manchon est muni de moyens d'arrêt (93) conçus pour venir en butée contre ladite collerette s'étendant radialement et s'opposer à ladite sollicitation élastique.

4. Un maître-cylindre selon la revendication 3, caractérisé en ce que lesdits moyens d'arrêt sont constitués par une série de saillies (93) s'étendant radialement circonférentiellement espacées qui sont formées sur l'organe formant manchon de façon à faire saillie vers l'intérieur à partir de ce dernier.

**Patentansprüche**

1. Hauptbremszylinder (10) mit einem Gehäuse (12), in dem eine Bohrung (14) und ein Reservoir (24) für ein Gehäuse gebildet sind, wobei das Gehäuse mit zwei Einlässen (26, 28) und zwei Auslässen (30, 32) versehen ist, von denen die Einlässe Flüssigkeit vom Reservoir in die Gehäusebohrung leiten und die Auslässe mit zwei druckmittelbetätigten Vorrichtungen (34, 36) verbunden sind, und einer Kolbenanordnung (50), die abgedichtet in der Gehäusebohrung angeordnet ist und mit dem Gehäuse zwei volumenveränderliche Druckkammern (190, 198) bildet, von denen jede mit einem der Einlässe und mit einem der Auslässe verbunden ist, wobei die Kolbenanordnung eine Hülse (56) und einen Lagerkörper (52) umfaßt, die zwei Bohrungen (58, 54) bilden, in denen zwei Kolben (80, 136) gleiten und abgedichtet angeordnet sind, wobei die beiden Kolben mit der Hülse und dem Lagerkörper zusammenwirken, um innerhalb der Kolbenanordnung einen volumenveränderlichen Hohlraum (174) zu bilden, wobei die Kolbenanordnung außerdem mit Kanälen (178, 180) versehen ist, die den volumenveränderlichen Hohlraum mit einem der Einlässe und mit einem der Auslässe verbinden und der volumenveränderliche Hohlraum auf diese Weise einen Abschnitt einer der volumenveränderlichen Druckkammern bildet, dadurch gekennzeichnet, daß die Hülse (56) und der Lagerkörper (52) mit zusammenwirkenden Mitteln (108, 114, 66) versehen sind, die sie permanent aneinander befestigen, so daß die Kolbenanordnung (50) als Einheit in die Gehäusebohrung eingesetzt bzw. aus der Gehäusebohrung entfernt werden kann.

2. Hauptbremszylinder nach Anspruch 1, bei der der Lagerkörper (52) einen axial verlaufenden Abschnitt (108) aufweist, der in ein offenes Ende der Hülsenbohrung (58) vorsteht, dadurch gekennzeichnet, daß die zusammenwirkenden Mittel mehrere in Umfangsrichtung beabstandete, radial verlaufende Vorsprünge (114) umfassen, die an dem axial verlaufenden Abschnitt (108) des Lagerkörpers gebildet sind und an der Hülse (56) so angreifen, daß sie mit diesem einen Schrumpfsitz bilden, der die Hülse mit dem Lagerkörper verbindet.

3. Hauptbremszylinder nach Anspruch 1 oder 2, bei dem einer (80) der Kolben, der in der Hülse (56) angeordnet ist, napfförmig ausgebildet ist und ein geschlossenes Ende (28), eine sich in Umfangsrichtung erstreckende Seitenwand (84) und einen radial verlaufenden-Flansch (88) aufweist, der an dem dem Lagerkörper (52) zugewandten offenen Ende der Seitenwand gebildet ist, wobei sich ein elastisches Teil (100) zwischen der Hülse und dem radial verlaufenden Flansch erstreckt, um den napfförmigen Kolben in Richtung auf den Lagerkörper elastisch vorzuspannen, dadurch gekennzeichnet, daß die Hülse mit Anschlagmitteln (93) versehen ist, die an dem radial verlaufenden Flansch angreifen und der elastischen Vorspannung entgegenwirken.

4. Hauptbremszylinder nach Anspruch 3, dadurch gekennzeichnet, daß die Anschlagmittel aus mehreren in Umfangsrichtung beabstandeten, radial verlaufenden Vorsprüngen (93) bestehen, die an der Hülse so angeformt sind, daß sie von dieser aus einwärts vorstehen.

FIG. 1

FIG. 2

FIG. 3

FIG. 4